# EUROPEAN PATENT APPLICATION

(11) **EP 4 761 202 A1**
(43) Date of publication of application: **17.06.2026**
(21) Application number: 24219090.8
(22) Date of filing: 11.12.2024
(51) Int. Cl.: H04L 41/0806, H04L 41/0803, H04L 41/082

(54) **METHODS, COMPUTER PROGRAM, AND APPARATUS**

(71) Applicant: Deutsche Telekom AG, 53113 Bonn (DE)
(72) Inventor: SCHRAUB, Stefan, 61239 Ober-Mörlen (DE); GEILHARDT, Frank, 16341 Panketal (DE); KIND, Mario, 10119 Berlin (DE)
(74) Representative: 2SPL Patentanwälte PartG mbB

(57) **Abstract**

Examples relate to a method for configuring a network component. The method comprises initializing a configuration interface configured to exchange data between the network component and an external device. The configuration interface is for configuring the network component. Initializing the configuration interface comprises processing hard code.

## Description

### Field

Examples relate to methods, a computer program, and an apparatus for configuring a network component, more particularly, but not exclusively, to a concept for initializing a configuration interface.

### Background

The complexity of network components, e.g., home routers, and their configuration is constantly increasing as more and more configuration options and new application scenarios emerge. A manual configuration assuming the required functions may be expedient, but a very complex procedure for the user is to be expected. This manual configuration can also lead to incorrect settings, which can cause the network component to malfunction. If a user is not overwhelmed with adjusting the settings of the network component because they have expert IT knowledge, a misconfiguration due to the complex configuration on the network component cannot be ruled out. Thus, there may be a need to provide a method for configuring a network component.

### Summary

It is a finding of the present disclosure that a method for configuring a network component can ensure that the setting of the network component comprises a configuration interface. The configuration interface may be used to communicate with an external device, e.g., a communication server. Thus, by ensuring that the configuration interface is part of the setting of the network component, accessibility of the network component can be ensured. In this way, a lock out from the network component, especially from an external network, can be prevented.

Examples provide a method for configuring a network component. The method comprises initializing a configuration interface configured to exchange data between the network component and an external device. The configuration interface is for configuring the network component. Initializing the configuration interface comprises processing hard code. Processing the hard code for initializing the configuration interface may allow to prevent a setting or part of a setting of the configuration interface from changing. That is, the configuration interface can be initialized, such that the setting or a part of the setting of the configuration interface cannot be changed or adjusted. In this way, a misconfiguration of the network component leading to malfunction can be avoided. Thus, a configurability of the network component can be ensured.

In an example, the hard code may be processed such that the destination address of the configuration interface is unchangeable. That is, a part of the setting of the network component, which is initialized processing the hard code, may be the destination address of the configuration interface. In this way, it can be ensured that the configuration interface can be accessed from an external device, e.g., a remote server and optionally from an internal Local Area Network (LAN). Since the destination address may be unchangeable, missing connectivity between the network component and an external device can be avoided.

In an example, the method may further comprise obtaining adjustment data indicating an adjustment of a setting of at least one interface of a plurality of interfaces and adjusting the setting of the at least one interface of the plurality of interfaces based on the adjustment data. The adjustment data may allow to change or adjust the setting of the network component. For example, the adjustment data may allow to change a setting of the configuration interface without changing the destination address.

Examples provide (another) method for configuring a network component. The method comprises initializing a plurality of interfaces. A configuration interface of the plurality of interfaces is configured to exchange data between the network component and an external device. The configuration interface is for configuring the network component. Further, the method comprises obtaining adjustment data indicating an adjustment of the setting of at least one interface of the plurality of interfaces. If the setting of the configuration interface is affected by the adjustment data, the method comprises adjusting the setting of the at least one interface of the plurality of interfaces such that at least a part of the setting of the configuration interface remains unchanged or a surrogate interface configured to exchange data between the network component and the external device is set. For example, the destination address of the configuration interface can remain unchanged. In this way, missing connectivity between network component and external device can be avoided. Just like that missing connectivity can be avoided by setting a surrogate interface comprising a destination address which allows for communication with the external device. This means that if the configuration interface is changed, the configuration interface can be configured so that the surrogate interface has the same destination address as the configuration interface before the change. In this way, it can be ensured that at least one interface of the plurality of interfaces can be configured to exchange data between the network component and the external device.

In an example, keeping the configuration interface unchanged may comprise checking whether a further interface of the plurality of interfaces is configured to exchange data with the external device and if no further interface is configured to exchange data with the external device, blocking an adjustment of at least a part of the setting of the configuration interface. Blocking the adjustment of at least the part of the setting may allow to prevent overriding the destination address of the configuration interface. In this way, it can be ensured that the configuration interface can be only adjusted if a further interface of the plurality of interfaces can act as configuration interface.

In an example, setting the surrogate interface may comprise checking, after adjusting the setting of the plurality of interfaces, whether at least one interface of the plurality of interfaces is configured to exchange data between the network component and the external device. If no interface of the plurality of interfaces is configured to exchange data with the external device, setting the surrogate interface may comprise adjusting an interface of the plurality of interfaces to be configured to exchange data between the network component and the external device. Checking whether at least one interface of the plurality of interfaces is configured to exchange data between the network component and the external device may allow to restore a configuration interface or provide an alternative interface for configuring the network component. For example, the configuration interface may be deleted by processing the adjustment data, e.g., by flashing the network component. In this case, an interface of the plurality of interfaces can be configured to exchange data with the external device such that a surrogate interface is provided. In this way, if no interface is configured to exchange data between the network component and the external device, another interface (i.e., a surrogate interface) can be set to allow for configuring the network component.

In an example, adjusting the setting of the plurality of interfaces may comprise adjusting a traffic separation and/or a traffic control of the network component. Adjusting the traffic separation and/or the traffic control may allow to improve a performance of the network component.

In an example, adjusting the traffic separation and/or the traffic control may comprise generating an application programming interface (API) call and processing the API call for adjusting the setting of the plurality of interfaces. The API call may allow to adjust the plurality of interfaces of the network component in a facilitated way.

In an example, adjusting the traffic separation and/or traffic control may comprise adjusting a destination address of at least one interface of the plurality of interfaces. Adjusting the destination address of at least one interface of the plurality of interfaces may allow to provide a traffic separation and/or a traffic control on the integration level of the network component. For example, the network component may be a router and thus traffic separation and/or traffic control can take place at the side or integration level of the router.

In an example, the adjustment data may indicate a plurality of different types of transport. Thus, the adjustment data can be used to priorities different types of transport, for example, management transport may be assigned higher priority than remote access transport.

In an example, the adjustment data may be obtained by receiving from a communication server. The communication server is configured to provide traffic data indicating a traffic separation and/or a traffic control. That is, the communication server may transmit traffic data to the network component for adjusting a setting of the network component. For example, the communication server may generate the traffic data indicating priorities of different types of transport.

In an example, the method may be for configuring a router. Thus, a configuration of the router may be facilitated.

Examples provide a method to be executed by communication server. The method comprises obtaining configuration data indicating a configuration of a network component and optionally obtaining user data indicating a configuration state of the network component. Further, the method comprises generating, based on the configuration data and optionally the user data, traffic data indicating a traffic separation and/or a traffic control for the network component and transmitting the traffic data for adjusting a setting of the network component. Thus, the communication server can generate the traffic data for adjusting the setting of the network component such that the network component is adjusted with respect to a configuration state, e.g., a setting desired by an end user of the network component.

Examples provide a computer program having a program code for performing one of the methods as described above, when the computer program is executed on a computer, a processor, or a programmable hardware component.

Examples provide an apparatus for a network component. The apparatus comprises one or more interfaces configured to exchange data (e.g., with the communication server) and one or more processing devices, which are configured to perform one of the methods described herein.

### Brief description of the Figures

Some examples of apparatuses, methods, and/or computer programs will be described in the following by way of example only, and with reference to the accompanying figures, in which
Fig. 1a shows a block diagram of an example of a method for configuring a network component;
Fig. 1b shows a block diagram of an example of another method for configuring a network component;
Fig. 2 shows a block diagram of an example of a method to be executed by a communication server;
Figs. 3a and 3b show flow diagrams of different ATSTC initializations;
Fig. 4 shows a block diagram of an example of a telecommunication system; and
Fig. 5 shows a block diagram of an example of an apparatus for a telecommunication system.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

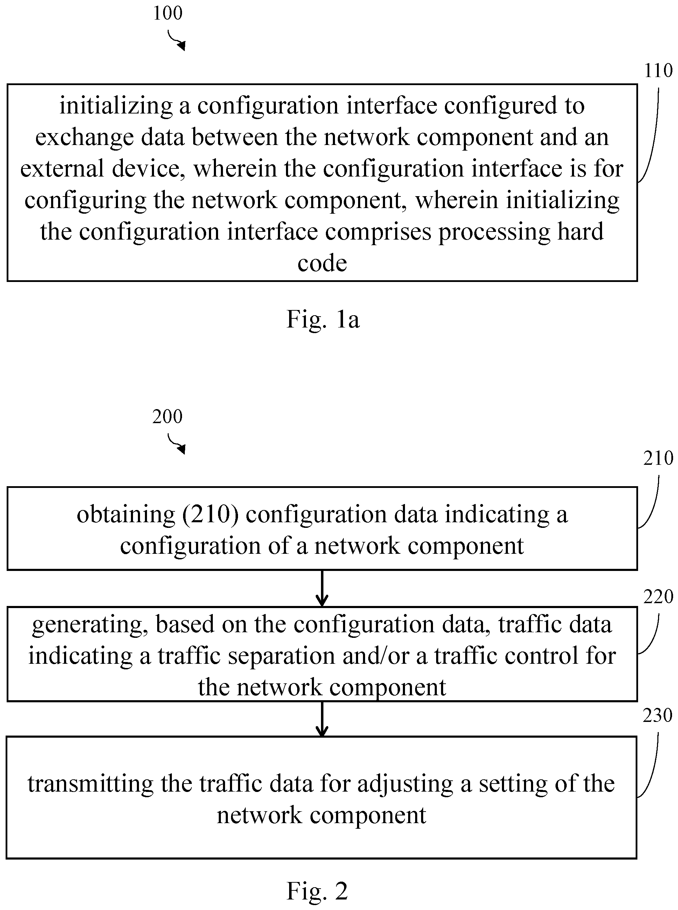

Fig. 1a shows a block diagram of an example of a method 100 for configuring a network component. The method 100 comprises initializing 110 a configuration interface configured to exchange data between the network component and an external device. The configuration interface is for configuring the network component. Initializing 110 the configuration interface may comprise obtaining information about a setting of the configuration interface of the network component. For example, the information about a setting may be retrieved from non-volatile memory, such as Non-Volatile Random Access Memory (NVRAM), or a default setting if no configuration file is present, received dynamically from a network management system, e.g., a communication server, and/or through manual user input. Once the information about the setting is obtained, the network component may assign a role to each interface based on the specified settings, such as whether it will function as a LAN or Wide Area Network (WAN) interface or configuration interface. Finally, the interface may be brought into an operational state by enabling it and establishing connectivity parameters, such as internet protocol (IP) addresses, e.g., a destination address, subnet masks, and protocol configurations, to ensure it can handle network traffic. For example, the information about the setting may comprise hard code.

An operational state may refer to the current status, condition and/or mode of a system, component, or process as it functions in real-time. It reflects how the system is actively performing its intended tasks, encompassing both its technical and functional aspects. In networking, for example, the operational state of a network component interface might indicate whether the interface is "up" (active and transmitting traffic), "down" (inactive or disconnected), or in another condition like "administratively shut down." This state is distinct from the configuration state, which defines how the system is set up or intended to function, regardless of whether it is currently active.

Initializing 110 the configuration interface comprises processing hard code. This means that at least a part of the setting of the initialized configuration interface may be set by processing hard code. Processing the hard code for initializing the configuration interface may allow to prevent a setting or part of a setting of the configuration interface from changing. For example, a destination address of the configuration interface may be defined or set by processing the hard code. Thus, the configuration interface can be referred to as hard-coded interface.

A hard-coded interface may have settings explicitly defined and tightly controlled (e.g., destination address, subnet mask, Maximum Transmission Unit (MTU), routing policies). Changes to the hard-coded interface may require manual reconfiguration and are less adaptable to changes, e.g., network changes. A normal static interface may also use manual settings, but these might be less restrictive, allowing for easier integration with dynamic elements if needed later.

For example, a hard-coded interface may implement safeguards that enforce immutability directly within the network component or through external management systems. For example, configuration locking, read-only configuration notes, access control lists (ASL), policy-based management and/or immutable table configurations via templates may be used to provide a hard-coded interface. This means an "effectively hard-coded interface" can be achieved using at least one of the aforementioned techniques.

Processing the hard code for initializing the configuration interface may allow to prevent a setting or part of a setting of the configuration interface from changing. That is, the configuration interface can be initialized such that the setting or a part of the setting of the configuration interface cannot be changed or adjusted. In this way, a misconfiguration of the network component leading to malfunction can be avoided. Thus, the configurability of the network component can be maintained.

In an example, the hard code may be processed such that the destination address of the configuration interface is unchangeable. This means that the destination address of the configuration interface can be part of a "truly hard-coded interface". A truly hardcoded interface can be set by several techniques. For example, firmware may allow to bake the setting of the configuration interface into the firmware itself. That is, the firmware may embed the configuration interface setting directly into its code. For example, a hardware-based solution where the setting of the configuration interface is stored in protected, non-volatile memory regions or Read-Only Memory (ROM) may prevent any runtime modifications to the setting of the configuration interface, requiring physical access or special procedures to alter.

An effectively hard-coded interface may rely on techniques like configuration enforcement tools, read-only file systems, or automated reversion to predefined states, making changes impractical but technically possible with enough privilege or effort. In contrast, a truly hard-coded interface may be immutable by design, with its configuration embedded in firmware or stored in ROM, for example. That is, initializing a configuration interface can involve processing hard code to achieve either an effectively hard-coded interface or a truly hard-coded interface, depending on the implementation approach and the level of immutability desired. In both cases, the initialization process may reflect the setting of the network component to make the configuration interface resistant to modification, but the underlying mechanisms and levels of permanence differ.

For example, hard code refers to a configuration or a setting explicitly defined and embedded into the network component in a way that they cannot be easily altered during regular operation. The hard code may be directly written into the network component's operational logic, firmware, or configuration files and is not intended to be altered dynamically during runtime. For an effectively hard-coded interface, the hard code may serve as a strict baseline enforced by software or external tools, while for a truly hard-coded interface, it may be embedded directly into firmware or hardware, making it immutable without physical and/or foundational network component changes.

In an example, the method 100 may further comprise obtaining adjustment data indicating an adjustment of a setting of at least one interface of a plurality of interfaces and adjusting the setting of the at least one interface of the plurality of interfaces based on the adjustment data. The adjustment data may allow change or adjustment to the setting of the network component. For example, the adjustment data may enable modification to a setting of the configuration interface without altering the destination address or other interface settings.

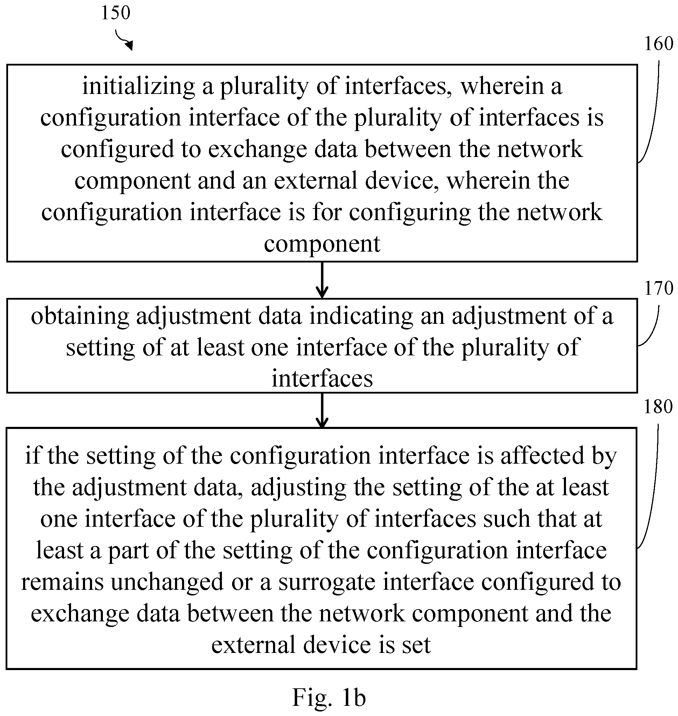

However, there may be a need to provide a configuration interface without processing hard code that allows the configuration interface to be customized under certain circumstances. Therefore, as an alternative to (and/or in conjunction with) the method 100 shown in Fig. 1a, another method for configuring a network component is proposed in the present application. The other method is shown in Fig. 1b.

Fig. 1b shows a block diagram of an example of a method 150 for configuring a network component. The method 150 comprises initializing 160 a plurality of interfaces. A configuration interface of the plurality of interfaces is configured to exchange data between the network component and an external device. The configuration interface is for configuring the network component.

Further, the method 150 comprises obtaining 170 adjustment data indicating an adjustment of the setting of at least one interface of the plurality of interfaces. The adjustment data may be obtained by receiving, e.g., from a communication server, user equipment. Optionally or alternatively, the adjustment data may be obtained by retrieving it, e.g., from a storage device.

If the setting of the configuration interface is affected by the adjustment data, the method 150 comprises adjusting 180 the setting of the at least one interface of the plurality of interfaces such that at least a part of the setting of the configuration interface remains unchanged or a surrogate interface configured to exchange data between the network component and the external device is set. For example, the destination address of the configuration interface can remain unchanged. Alternatively, the surrogate interface can replace the functionality of the configuration interface. For example, the surrogate interface may be set such that the destination address is identical to the destination address of the configuration interface before obtaining the adjustment data. Keeping part of the setting of the configuration interface unchanged or setting a surrogate interface may ensure an interface is available for data exchange between the network component and the external device during operational use.

Thus, instead of protecting the configuration interface by processing hard code as described with reference to Fig. 1a, method 150 may alternatively ensure that at least one interface comprises a functionality comparable to the configuration interface part of the setting of the network component. That is, missing connectivity between network component and external device can be avoided either by processing hard code or managing the plurality of interfaces. Thus, it can be ensured that at least one interface of the network component is configured to exchange data between the network component and the external device.

A surrogate interface may be an alternative network interface configured to take over the functionality of the configuration interface. It may ensure uninterrupted data exchange between the network component and an external device when the original configuration interface is adjusted or becomes unavailable. The surrogate interface may replicate critical settings, such as the destination address, to maintain connectivity and/or operational consistency. That is, the surrogate interface may be a fallback or replacement interface to ensure uninterrupted connectivity.

For example, a network component may be configured using method 100. However, there may be a need to provide an end user with the possibility to change the setting of all interfaces of the network component. Therefore, a user may flash the firmware of the network component (e.g., the adjustment may indicate a flash of the firmware). Thus, a truly hard-coded interface can be overridden by flashing the firmware and installing new firmware. The new firmware may comprise program code for executing method 150 (or at least adjusting 180). Thus, a truly hardcoded interface can be replaced by a management of the plurality of interfaces. The same can also be done in reverse if a user wants to restrict the ability of an end user to change the setting of a network component interface.

In an example, keeping the configuration interface unchanged may comprise checking whether a further interface of the plurality of interfaces is configured to exchange data with the external device and if no further interface is configured to exchange data with the external device, blocking an adjustment of at least a part of the setting of the configuration interface. Blocking an adjustment of at least a part of the setting of the configuration interface may allow to prevent a misconfiguration of the plurality of interfaces. That is, blocking the adjustment may allow to keep the configuration interface configured to exchange data between the network component and the external device. For example, the part of the setting which is blocked for adjustment may be the destination address of the configuration interface. In this way, it can be ensured that the configuration interface can be only adjusted if a further interface of the plurality of interfaces can act as other configuration interface replacing the configuration interface. This means method 150 may prevent any change of (at least a part) of the setting of the configuration interface, unless another interface is configured to replace it, comprising having the same destination address.

In an example, setting the surrogate interface may comprise checking, after adjusting the setting of the plurality of interfaces, whether at least one interface of the plurality of interfaces is configured to exchange data between the network component and the external device. If no interface of the plurality of interfaces is configured to exchange data with the external device, setting the surrogate interface may comprise adjusting an interface of the plurality of interfaces to be configured to exchange data between the network component and the external device.

For example, the method 150 can enforce a defined state of the network component continuously. While technically the configuration of the plurality of interfaces could still be modified locally in a flexible way, the network component can automatically detect and revert the changes, making the configuration of a configuration interface effectively immutable.

For example, the method 150 could serve to always revert to a predefined configuration of the network component stored in a secure, protected location upon reboot. While changes might be possible in the running configuration, they would never persist across restarts. In this case, if no interface of the plurality of interfaces is configured to exchange data with the external device, the method 150 may further comprise restarting the network component. By restarting the network component the predefined configuration of the network component can be restored. This means that setting the surrogate interface may comprise restarting the network component.

For example, today's home routers have the actual features to provide and use an Internet connection, virtual private networks, multi-Virtual Private Network (VPN) setups or policy-based routing (PBR). However, automated traffic separation and traffic control are missing as an overarching overall application and procedure. This is a problem, for example, if all traffic (0.0.0.0/0) is to be routed to a single destination (e.g., a security gateway (GW)) and services such as remote access, Voice-over-IP (VoIP) and IP Television (IPTV) are still to be supported. In this case, the home router can no longer be reached via its management address (remote access) or traffic such as VoIP or IPTV can be routed directly to the actual destination addresses. Typically, the traffic is then forwarded from the security GW to the voice and IPTV platform, which can result in increased latency times due to a change in traffic routing, which should be avoided. In addition, home routers are no longer accessible via a remote access service. Furthermore, the ability to route traffic to different VPNs depends heavily on the router hardware and firmware used. That is, it may be problematic and error-prone to route all traffic to a destination address via a dedicated VPN. It is a finding of the present disclosure, that a default setting of a network component, such as a router, may be provided, to ensure that not all traffic is routed to the same destination address. That is, the methods described above may ensure that at least one interface of the network component may be configured to exchange data with an external device.

For example, the network component can be configured so that a management address of the network component is accessible from the external device and optionally from an internal LAN for all configuration states of the network component. This means that the default setting can allow a connection (to the network component) from an external device and optionally from an internal LAN during runtime of the network component. For example, the setting of the network component may comprise at least one configuration interface with a predefined destination address for allowing data exchange with the external device. Since the default setting may allow a configuration of the network component for all configuration states of the network component, traffic separation and/or traffic control may be improved using the configuration interface/surrogate interface part of the default setting. In this way, an automated traffic separation and/or traffic control (ATSTC) can be provided for the network component. For example, in order to ensure that certain traffic is diverted in accordance with the data traffic behavior rules without any configuration effort on the part of the end user, ATSTC within a network component such as a home router may be used.

For example, ATSTC may provide an algorithm to provide traffic separation and/or traffic control and that optionally performs a weighting mechanism based on certain parameters taking into account the default setting (of the configuration interface). Traffic separation and/or traffic control may be provided based on policy maps, intent based networking, dynamic quality of service, for example. ATSTC may direct different types of transport (e.g., video streaming, web browsing, VoIP) along specific paths and/or prioritize them based on their characteristics, such as latency sensitivity or bandwidth requirements. ATSTC may implement rules to regulate the flow of traffic, such as rate-limiting certain applications, reserving bandwidth for critical services, or dynamically adapting to changing network conditions. The weighting mechanism could introduce a weighting system to prioritize and/or distribute traffic. This weighting mechanism could be based on parameters such as application type (e.g., critical vs. non-critical traffic), time of day (e.g., prioritizing business traffic during work hours), network congestion levels (e.g., dynamically adjusting weights to balance load), for example. The combination of these functions may allow ATSTC to dynamically improve the network for both performance and policy compliance, ensuring that resources are allocated effectively, and/or critical traffic is prioritized under varying conditions. The default setting may ensure that the ATSTC can be accessed if needed.

A configuration to be provided by ATSTC can depend on a user input. For example, the user input may be part of the adjustment data or the adjustment data may be generated based on the user input. For example, the external device may be user equipment such as a notebook or a smartphone. The user may provide a user input using the user equipment, e.g., using a graphical user interface displayed on the user equipment. In this case, data indicating the user input, e.g., linked decisions selected by the end user, can be transmitted from the external device to the network component. The network component can determine the adjustment data based on the user input, e.g., the linked decision selected by the end user, for adjusting the setting of the network component. Optionally or alternatively, the user input may be obtained at a communication server. The communication server may determine the adjustment data based on the user input, e.g., user data indicating a configuration setting of the network component. Then, the communication server may transmit the determined adjustment data to the network component.

The network component can perform ATSTC based on the user input and/or the adjustment data. For example, the network component can compile the user input and/or the adjustment data to form an overall configuration with suitable routing decisions, for example, remote access, customer traffic routing to a security solution, IPTV service, voice service. Alternatively, the compilation to form the overall configuration may be performed by the communication server. In this case the adjustment data may indicate the overall configuration. The overall configuration may include the appropriate routing decisions and/or may contain functional elements to route different traffic into different flows. For example, the overall configuration may depend on a selection based on logical decisions, a definition of a necessary traffic policy enforcement point, for example. For example, source and destination page can be clearly defined (i.e., traffic separation), outgoing traffic separations can be defined in the network component, e.g., home router, and/or different traffic flows can be checked for correctness. The overall configuration, e.g., change of the setting of the network component, can be performed, for example, using an API call, Abstract Syntax Language (ASL).

In an example, adjusting the setting of the plurality of interfaces may comprise adjusting a traffic separation and/or a traffic control of the network component. For example, ATSTC may be used for configuring the network component such that a traffic separation and/or a traffic control for a configuration state of the network component can be achieved.

The ATSTC may be based on several parameters and/or conditions. For example, the ATSTC may comprise making a selection based on logical decisions, clearly defining source and target pages (traffic separation), defining outgoing traffic separations in the network component, using a definition of the necessary traffic policy enforcement point, changing a configuration via API call and/or checking of traffic flows for correctness.

In an example, adjusting the traffic separation and/or the traffic control may comprise generating an API call and processing the API call for adjusting the setting of the plurality of interfaces. The API call may allow to adjust the plurality of interfaces of the network component in a facilitated way. Alternatively, the API call can be generated by the external device, e.g., a communication server. In this case, the API call may be received from the external device. For example, the API call for adjusting the setting of the plurality of interfaces may read:

```
 {
 "routerConfig": {
  "network": {
    "lanlp": "192.168.1.1",
    "subnetMask": "255.255.255.0",
    "gateway": "192.168.1.254",
    "dnsServers": ["8.8.8.8", "8.8.4.4"]
   },
  "trafficPolicies": {
    "class1": {
     "description": "Management Traffic",
     "priority": 1,
     "source": ["192.168.1.1"],
     "destination": ["remoteManagementServer"],
     "policyEnforcement": "strict"4
      }
    },
  "outgoingTrafficSeparation": {
    "management": {
     "source": "192.168.1.1",
     "destination": ["remoteManagementServer"],
     "priority": 1
     }
    }
   }
 }
```

This API call can ensure that the destination address of the configuration interface is enforced by a strict policy. This means the configuration interface may be an effectively hard code interface. Using API calls is for illustrative purposes only. Alternatives such as ASL may be used.

In an example, adjusting the traffic separation and/or traffic control may comprise adjusting a destination address of at least one interface of the plurality of interfaces. Adjusting the destination address of at least one interface of the plurality of interfaces may allow to provide traffic separation of on the level I component. This means that ATSTC can allow the network component to configure the traffic for itself. Thus, traffic separation and/or traffic control can take place at the side or integration level of the network component.

In an example, the adjustment data may indicate a plurality of different types of transport. Optionally, the adjustment data may indicate priorities of different types of transport. Alternatively, the plurality of different types of transport can be retrieved from a storage medium. Thus, the ATSTC can perform a weighting mechanism based on the priorities of different types of transport.

For example, the weighting mechanism of ATSTC could perform a traffic weighting based on a priority. This means different types of transport may be assigned a different priority. For example, priority 1 may be assigned to management traffic comprising remote management traffic (e.g., comprising traffic of the configuration interface), priority 2 may be assigned to remote access traffic (e.g., VPN with example protocols such as Point-to-Point Tunneling Protocol, Layer 2 Tunneling Protocol or Internet Protocol Security) and priority 3 may be assigned to LAN and WAN traffic (e.g., LAN traffic = (internal network traffic) comprising wireless LAN (WLAN) traffic; WAN traffic = (Internet traffic) comprising VoIP, multicast traffic taking into account possible Quality of Service (QoS) classes).

In an example, the adjustment data may be obtained by receiving from a communication server. The communication server is configured to provide traffic data indicating a traffic separation and/or a traffic control. That is, the communication server may transmit traffic data to the network component for adjusting a setting of the network component. For example, the communication server may generate the traffic data indicating priorities of different types of transport.

In an example, the method 100, 150 may be for configuring a router. That is, the method 100, 150 may be performed by a router. For example, a router such as a home route my be configured to execute the method 100, 150.

In principle, the aspects and features described in relation to a particular method of the methods 100, 150 may also be combined to replace an identical or similar feature of one method or to introduce the features additionally into the one method.

The configuration interface is for configuring the network component. That is, the configuration interface may be used to receive data for configuring the network component. Thus, the configuration interface may allow to receive information about a configuration state of the network component from an external device.

A network component may be a part of a router, a switch, or an access point or a router, a switch, or an access point, for example. For example, a processing circuitry part of a router may be the network component configured to perform the method 100 and/or 150. A router may be an enterprise router or a home router. An enterprise router may be a high-performance network component designed for large-scale environments like businesses, data centers, or service providers. It may support advanced features such as dynamic routing protocols, high-speed data processing, redundant hardware for reliability, and scalability to handle thousands of connected devices. A home router may be a consumer-grade networking device designed for residential use. It may provide basic routing functionality along with Wi-Fi connectivity, network address translation (NAT), and a Dynamic Host Configuration Protocol server for device management. Home routers may be optimized for ease of use and are configured to handle the moderate traffic of typical household devices such as laptops, smartphones, and smart home gadgets.

The external device may be user equipment such as laptop, smartphone or a server.

Fig. 2 shows a block diagram of an example of a method 200 to be executed by a communication server. The method 200 comprises obtaining 210 configuration data indicating a configuration of a network component and optionally obtaining 220 user data indicating a configuration state of the network component. The configuration data may be obtained by receiving from the network component, by receiving from user equipment and/or by retrieving it from a storage medium.

Further, the method 200 comprises generating 230, based on the configuration data and optionally the user data, traffic data indicating a traffic separation and/or a traffic control for the network component and transmitting 240 the traffic data for adjusting a setting of the network component. Thus, the communication server can generate the traffic data for adjusting the setting of the network component such that the network component is adjusted with respect to an operational setting, e.g., a setting desired by an end user of the network component. The method 200 may be performed in conjunction with the methods as described with reference to Figs. 1a and/or 1b. That is, the communication server may be a counterpart to the network component. For example, the communication server may generate the adjustment data such that the adjustment data is obtained by the network component by receiving from the communication server.

For example, the communication server may be used to generate the adjustment data. This means the traffic data may comprise or may be identical to the adjustment data. In this case, the communication server may transmit the adjustment data to the network component, e.g., a router. That is, ATSTC may be performed by the network component in conjunction with the communication server. The communication server may generate the adjustment data which can be processed by the network component to adjust the setting of the network component. For example, the communication server may orchestrate a plurality of network components and thus may generate adjustment data for the plurality of network components.

Optionally, user data indicating a configuration of the network component may be obtained. The user data may be obtained by receiving from user equipment and/or by retrieving it from a storage medium. The user data may allow to generate the traffic data based on a configuration state desired by the user. This means the setting of the network component may depend on the user specific parameters such like user's policy, required VPN connections.

For example, the communication server can be maintained by a network component provider. Thus, the network component provider can use the communication server to provide an end user of the network component with the possibility to configure the network component in a facilitated way. For example, the end user of the network component, such as a company, may provide policy guidelines to the network component provider for a desired configuration of the network component in a configuration state. These policy guidelines may be retrieved at the communication server from a storage medium, for example. Thus, the communication server can generate 230 the traffic data for adjusting the setting of the network component based on the user data. In this way, the network component provider can offer the end user a simple and convenient way to customize the configuration of the electrical component to the end user's needs.

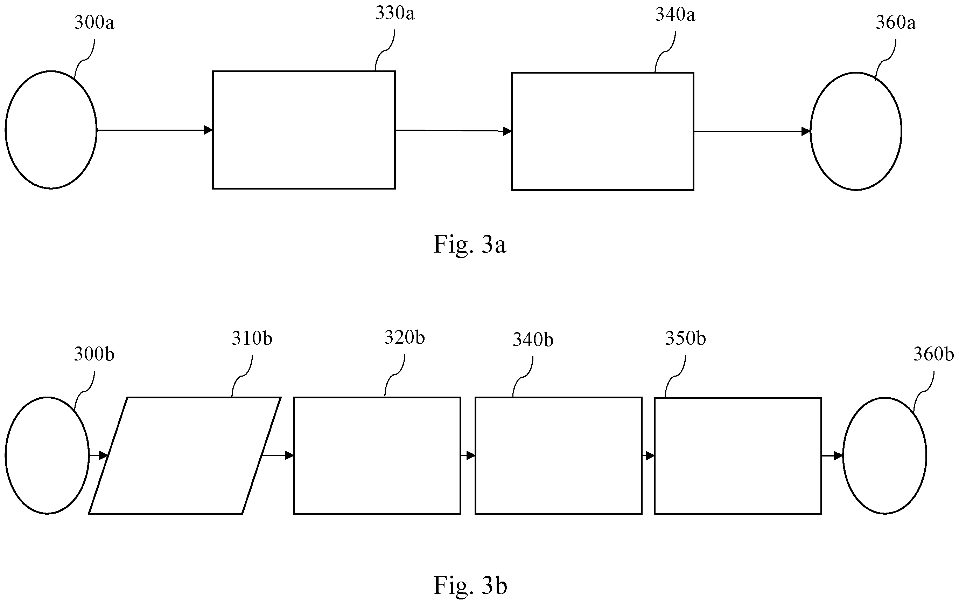

Figs. 3a and 3b show flow diagrams of different ATSTC initializations. Fig. 3a shows a flow diagram of an ATSTC initialization. The ATSTC may be performed by a telecommunication system comprising a network component and a communication server.

The ATSTC initialization starts at 340a. At 330a the network component, e.g., a router, may transmit information about its configuration to the communication server, e.g., the communication server may receive the configuration data from the network component. For example, the information about the configuration of the router may comprise information about a configuration of IPv4-addresses, IPv6-addresses and v4&v6 Domain Name System (DNS) Server addresses.

At 340a the communication server may generate the traffic data indicating a traffic separation and/or a traffic control for the network component. For example, the traffic data may comprise a default setting so that a management address of the network component is accessible from the external device and optionally from an internal LAN for all configuration states of the network component. The traffic data can be transmitted from the communication server to the network component. Thus, the network component can receive data required for adjusting the setting of the natural component. For example, the traffic data may comprise an API call which is processed by the network component to adjust the setting of the network component.

At 360a the ATSTC initialization is finished.

Fig. 3b shows a flow diagram of an another ATSTC initialization comprising customer specific information. This means in contrast to Fig. 3a the adjustment of the setting of the network component is also based on the end user's needs, e.g., based on user data.

The other ATSTC initialization starts at 340b. At 310b user data may be obtained. The user data may be received from user equipment at the communication or may be retrieved from a storage medium. The user data may indicate a security solution which should be reached with a defined destination address. All traffic excluding the default behavior (i.e., the traffic of the configuration interface defined by the default setting) should be routed to a security GW.

At 320b the communication server may generate traffic data comprising a necessary policy map using an ASL, a route map and/or a policy-based routing rule. At 340b the communication server may transmit the traffic data to the network component. For example, the communication server pushes the configuration changes to network component via a network API call. This means the traffic data may comprise a network API call.

At 350b the network component processes the traffic data for adjusting the setting of the natural component. That is, the network component may perform ATSTC based on the traffic data generated by the communication server. Optionally, the network component may check different traffic flows for their correctness.

At 360b the other ATSTC initialization is finished.

An example of a home router configuration via API call comprising ATSTC policy map using user data indicating a security solution is shown below.

Requirements for the configuration of the home router may be:
▪ Include existing network configuration of home router comprising addresses, gateways and nameservers into ATSTC Policy Map.
▪ Include existing VPN A configuration with destination addres x.y.z.a and destination network 0.0.0.0 (total network traffic) excluding v4 & v6 management address.
▪ Include existing VPN B configuration with destination addres x.y.z.b and destination network 172.100.1.0 (dedicatd subnetwork) excluding v4 & v6 management address while outgoing traffic is not in conflict with VPN A.
▪ Consider priority classes like class 1 management traffic comprising remote management traffic, class 2 remote-access-traffic (VPN) and class3 LAN and WAN traffic.

Further, the home router may use one or more of the following:
▪ Make a selection based on logical decisions.
▪ Source and target pages are clearly defined (traffic separation).
▪ Outgoing traffic separations are defined in the home router.
▪ Definition of the necessary Traffic Policy Enforcement Point.
▪ Configuration changes are configured via API call.
▪ Check the various traffic flows for correctness.

Based on these requirements a hypothetical API call that theoretically fulfills previous requirements reads:

```
 {
 "routerConfig": {
  "network": {
    "lanlp": "192.168.1.1",
    "subnetMask": "255.255.255.0",
    "gateway": "192.168.1.254",
    "dnsServers": ["8.8.8.8", "8.8.4.4"]
   },
  
  "vpnConfig": {
    "vpnA": {
     "destinationAddress": "x.y.z.a", wohin geht verkehr
     "destinationNetwork": "0.0.0.0/0", allen verkehr dahin leiten außer management traffic
     "excludeManagementAddresses": true
    },
  
    "vpnB": {
     "destinationAddress": "x.y.z.b",
     "destinationNetwork": "172.100.1.0/24",
     "excludeManagementAddresses": true,
     "conflictCheck": "vpnA"
    }
   },
  
  "trafficPolicies": {
    " class 1 ": {
     "description": "Management Traffic",
     "priority": 1,
     "source": ["192.168.1.1"],
     "destination": ["remoteManagementServer"],
     "policyEnforcement": "strict"
    },
    "class2": {
     "description": "Remote-Access Traffic (VPN)",
     "priority": 2,
     "source": ["*"],
     "destination": ["x.y.z.a", "x.y.z.b"],
     "policyEnforcement": "high"
    },
    "class3": {
     "description": "LAN and WAN Traffic",
     "priority": 3,
     "source": ["*"],
     "destination": ["*"],
     "policyEnforcement": "default"
    }
   },
  
  "outgoingTrafficSeparation": {
    "vpnA": {
     "sourceNetworks": ["192.168.1.0/24"],
     "destinationNetwork": "0.0.0.0/0",
     "priority" : 2
    },
    "vpnB": {
     "sourceNetworks": ["192.168.1.0/24"],
     "destinationNetwork": "172.100.1.0/24",
     "priority" : 2
    },
    "management": {
     "source": "192.168.1.1",
     "destination": ["remoteManagementServer"],
     "priority" : 1
    }
   }
  }
 }
```

The aspects and features described in relation to a particular one of ATSTC initialization may also be combined with one or more of the other ATSTC initialization to replace an identical or similar feature of that other ATSTC initialization or to additionally introduce the features into the ATSTC initialization and vice versa.

The aspects and features described in relation to a particular one of the previous examples may also be combined with one or more of the further examples to replace an identical or similar feature of that further example or to additionally introduce the features into the further example.

In principle, ATSTC is only performed by the network component. However, if the adjustment data is generated by an external device, e.g., the communication server, it can also be said that ATSTC is performed by both network component and communication server, although the actual setting (so the actual ATSTC) is limited to the network component.

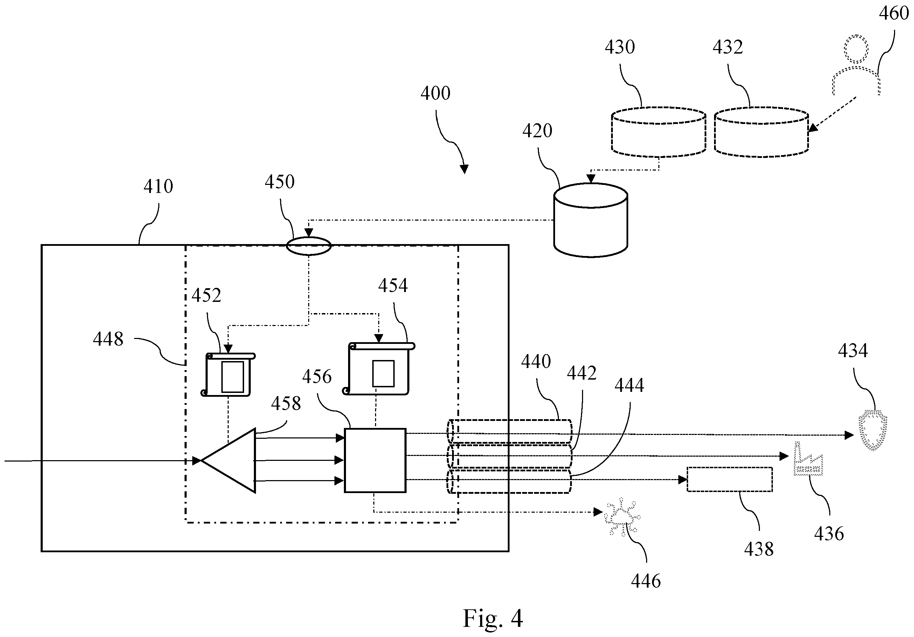

Fig. 4 shows a block diagram of an example of a telecommunication system 400. The telecommunication system 400 comprises a network component 410, e.g., a home router (e.g., configured to perform the method as described with reference to Figs. 1a, 1b), and a server 420, e.g., a communication server (e.g., configured to perform the method as described with reference to Fig. 2). Further, the telecommunication system 400 may comprise optionally components such as an Operation Support System 430 (OSS), a Business Support System 432 (BSS), a security GW 434, a company network 436 and other service, e.g., part of a service platform 438.

The network component 410 may use a plurality of VPN connections 440, 442, 444 for data exchange. For example, a first VPN connection 440 may be established to the security GW 434, a second VPN connection 442 may be established to the company network 436. Further, additional VPN connections can be established for other services. For example, the VPN connection 444 can be established to a service platform 438.

Further, the network component 410 may route internet traffic 446. For example, the network component 410 may route IPTV and voice via different virtual LANs (VLAN), e.g., Internet: VLAN ID 7; Telephony; (VoIP): VLAN ID 8; IPTV (Entertain): VLAN ID 9.

The network component 410 may be configured to perform ATSTC, e.g., as described with reference to Figs. 1a and 1b. For example, ATSTC may comprise several operations or steps as shown in Fig. 4 (indicated by the dashed rectangle 448). ATSTC may comprise at 450 access to the home router/administrative rights. For example, TR-069 (Customer Premises Equipment (CPE) WAN Management Protocol)/ TR-369 (User Services Platform, USP) may define the protocol for communication between a CPE device and an Auto Configuration Server (ACS). This access may provide mechanisms for automatic configuration, firmware updates, diagnostics and/or remote management of the CPE device. Further, ATSTC may comprise at 452 ASLs to identify traffic that is affected by the PBR rules. Further, the ATSTC may comprise at 454 route maps to define the actions to be applied to the traffic identified by the ACLs. Further, ATSTC may comprise at 456 applying the route map to the required interface. Further, ATSTC may comprise at 458 receiving incoming data packets from the customer side.

The communication server 420 may be configured to generate traffic data indicating an overall configuration/configuration change of the network component. For example, the traffic data may comprise the adjustment data. The OSS 430 may be configured to support, monitor and/or manage the telecommunications networks (e.g., network management, troubleshooting, service provision, monitoring). The BSS 432 may be configured to support customer management, e.g., provision of services such as Internet, security, voice, IPTV. For example, user data may be received from an end user or customer 460 at the BSS 432. The end user may define which services are to be provided and which traffic data behavior rules are to be applied. For example, the communication server as described with reference to Figs, 1a, 1b and 2 may comprise the communication server 420 and optionally the OSS 430 and/or the BSS 432.

The security GW 434 may comprise a network device configured to or a network service that monitors and/or controls data traffic between different networks to prevent unauthorized access and threats and optionally to ensure network security.

The company network 436 may be configured to connect a company's computers, servers and other IT resources and optionally may be configured to enable them to be shared and managed. The service platform 438 may be a cloud resource, for example.

The telecommunication system 400 may enable usage of a default setting of the network component. For example, the default setting can allow a connection to the network component 410 from the communication server 420 during runtime of the network component. Use case-specific settings which may be supported by the telecommunication system 400 may be routing overall traffic in the direction of a security GW 434, excluding the configuration interface and optionally VoIP and IPTV, traffic routing in the direction of the company network 436, traffic routing in the direction of the service platform 438, standard internet traffic forwarding of Internet traffic, VoIP, and/or from IPTV and/or incoming traffic, for example from VPN dial-in users or DynDNS traffic.

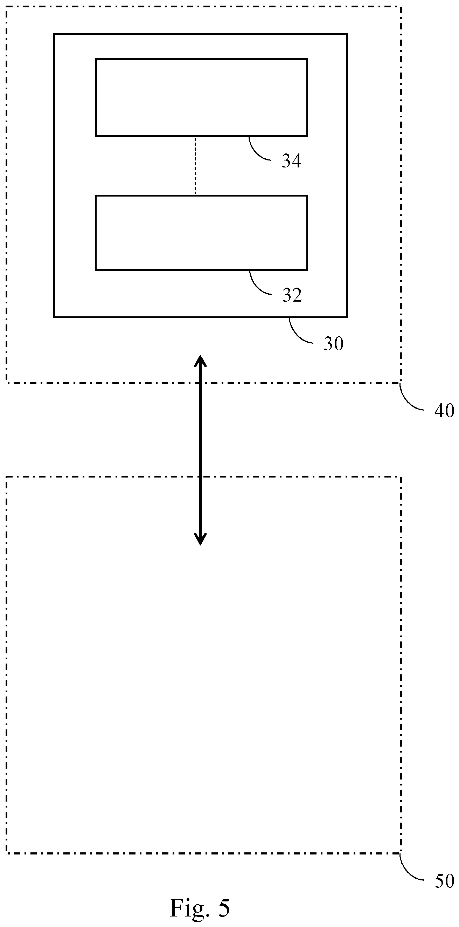

Fig. 5 shows a block diagram of an example of an apparatus 30 for a telecommunication system 50. The apparatus 30 comprises one or more interfaces 32, which are configured to communicate with/within the telecommunication system 50. The one or more interfaces 32 are coupled to one or more processing devices 34, which are configured to perform one of the methods as described above, e.g., the method to be executed by a network component or a part of a network component as described with reference to Figs. 1a and 1b or the method to be executed by a communication server or a part of a communication server as described with reference to Fig. 2. This means the apparatus 30 may be part of or may be a network component or a communication server.

As shown in Fig. 5, the respective one or more processing devices 34 are coupled to the one or more interfaces 32. The one or more interfaces 32 may correspond and/or be associated to one or more inputs and/or outputs for receiving and/or transmitting information, which may be in digital (bit) values according to a specified code or protocol, within a module, between modules or between modules of different entities. For example, an interface 32 may comprise interface circuitry configured to receive and/or transmit information. In examples an interface 32 may correspond to any means for obtaining, receiving, transmitting or providing analog or digital signals or information, e.g., any connector, contact, pin, register, input port, output port, conductor, lane, logical endpoint, especially based on internet protocol, IP, especially exposing an IP port and/or an API (Application Programming Interface); etc., as well as any abstraction thereof, especially based on virtualization, containerization, service abstraction, proxying, load-balancing, network address translation (NAT), cloud computing and/or serverless computing; which allows providing or obtaining a signal or information. An interface 32 may be configured to communicate (transmit, receive, or both) in a wireless or wireline manner and it may be configured to communicate, i.e., transmit and/or receive signals, information with further internal or external components. The one or more interfaces 32 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. Moreover, the one or more interfaces may be APIs in some examples.

The one or more processing devices 34 may be implemented using one or more processing units, one or more circuitries, any means for processing, such as a processor, a computer or a programmable hardware component being operable with accordingly adapted software. In other words, the described function of the one or more processing devices 34 may as well be implemented in software, which is then executed on one or more programmable hardware components. Such hardware components may comprise a general-purpose processor, a Digital Signal Processor (DSP), a micro-controller, etc. and/or an abstraction thereof.

Another example is a router, such as a home router 40 comprising an example of the apparatus 30. The network component 40 is shown in dashed lines as it is optional from the perspective of the apparatus 30. In Fig. 3 the apparatus 30 is shown outside the telecommunication system 50, which is only an example. The apparatus 30 or the network component 40, respectively, may as well be part of the telecommunication system 50. Yet another example is therefore a telecommunication system 50 comprising an example of the apparatus 30.

The telecommunication system 50 may be of various types. The types of telecommunication system 50 are designed to serve specific communication needs and technologies. Fixed-line telecommunication systems are traditional systems that use copper or fiber-optic cables to transmit voice and data, commonly used in landline phone services and broadband internet. Mobile telecommunication systems operate through wireless networks, enabling communication through devices such as smartphones via cellular networks like 4G (4^{th} generation), 5G, and beyond. Satellite communication systems use satellites in orbit to transmit signals over vast distances, providing coverage in remote areas where terrestrial systems are unavailable. Radio and television broadcast systems deliver audio and video signals to large audiences using radio frequencies, typically for entertainment or public service. VoIP (Voice over Internet Protocol) systems use the internet to transmit voice calls, offering flexibility and reduced costs compared to traditional phone systems. Additionally, optical communication systems leverage light waves transmitted through fiber optics to offer high-speed data transmission over long distances with minimal signal loss. Each type of telecommunication system serves different purposes and industries, contributing to the overall infrastructure of global connectivity.

In general, a telecommunication system 50 refers to a complex network of devices, technologies, and protocols designed to enable the transmission of information over distances. This system facilitates the exchange of data, voice, video, and other forms of communication between users, typically through wired or wireless means. Key components of a telecommunication system include transmission media (like fiber optics or radio waves), switching and routing devices (such as routers and base stations), and end-user devices (like smartphones, computers, and servers). The system operates through various layers of protocols that ensure reliable, secure, and efficient communication, whether for personal, business, or governmental use. These systems are integral to modern society, supporting services such as mobile communication, internet access, satellite transmission, and broadcasting, enabling global connectivity and access to information.

A network component, also referred to as network node, in a telecommunication system refers to any active, physical or logical device that is responsible for creating, receiving, or transmitting data within a network. These network nodes serve as critical points of communication and data transfer, enabling the flow of information across the network. Examples of network nodes include routers, switches, base stations, servers, and user devices like smartphones and computers. Each network node plays a specific role, such as directing data traffic, managing network connections, or handling user requests. In a telecommunications system, network nodes are interconnected, often forming a complex mesh that allows for efficient, scalable communication between multiple devices. These network nodes can operate on different layers of the OSI (Open System Interconnection) model, from physical infrastructure to application services, and are essential for maintaining the integrity, speed, and reliability of communication networks.

A mobile communication system is a type of telecommunication infrastructure that allows users to transmit voice, data, and multimedia services wirelessly while on the move. This system operates through a network of interconnected components, including mobile devices (like smartphones and tablets), base stations (NodeBs, eNodeBs, gNodeBs), and core network elements, facilitating seamless communication across wide geographic areas. Mobile communication systems use radio frequencies to establish connections between mobile devices and base stations, which in turn connect to the broader public or private networks, such as the internet or telephony systems. Modern mobile communication systems are based on technologies like 4G LTE (Long Term Evolution) and 5G, which provide high-speed data transfer, low latency, and improved connectivity. These systems enable various services, including voice calls, text messaging, video streaming, and internet access, making them integral to personal, commercial, and industrial communication in today's interconnected world.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (100) for configuring a network component, comprising:
initializing (110) a configuration interface configured to exchange data between the network component and an external device, wherein the configuration interface is for configuring the network component, wherein initializing the configuration interface comprises processing hard code.

2. The method (100) according to claim 1, wherein
the hard code is processed such that the destination address of the configuration interface is unchangeable.

3. The method (100) according to any one of the preceding claims, further comprising
obtaining adjustment data indicating an adjustment of a setting of at least one of a plurality of interfaces; and
adjusting the setting of the at least one interface of the plurality of interfaces based on the adjustment data.

4. A method (150) for configuring a network component, comprising:
initializing (160) a plurality of interfaces, wherein a configuration interface of the plurality of interfaces is configured to exchange data between the network component and an external device, wherein the configuration interface is for configuring the network component;
obtaining (170) adjustment data indicating an adjustment of a setting of at least one interface of the plurality of interfaces; and
if the setting of the configuration interface is affected by the adjustment data, adjusting (180) the setting of the at least one interface of the plurality of interfaces such that at least a part of the setting of the configuration interface remains unchanged or a surrogate interface configured to exchange data between the network component and the external device is set.

5. The method (150) according to claim 4, wherein
keeping the configuration interface unchanged comprises checking whether a further interface of the plurality of interfaces is configured to exchange data with the external device; and
if no further interface is configured to exchange data with the external device, blocking an adjustment of at least a part of the setting of the configuration interface.

6. The method (150) according to claim 4 or 5, wherein
setting the surrogate interface comprises checking, after adjusting the setting of the plurality of interfaces, whether at least one interface of the plurality of interfaces is configured to exchange data between the network component and the external device; and
if no interface of the plurality of interfaces is configured to exchange data with the external device, adjusting an interface of the plurality of interfaces to be configured to exchange data between the network component and the external device.

7. The method (100; 150) according to any one of claims 3-6, wherein
adjusting the setting of the plurality of interfaces comprises adjusting a traffic separation and/or a traffic control of the network component.

8. The method (100; 150) according to any one of claims 7, wherein
adjusting the traffic separation and/or the traffic control comprises generating an application programming interface call; and
processing the application programming interface call for adjusting the setting of the plurality of interfaces.

9. The method (100; 150) according to any claim 7 or 8, wherein
adjusting the traffic separation and/or traffic control comprises adjusting a destination address of at least interface one of the plurality of interfaces.

10. The method (100; 150) according to any one of claims 3-9, wherein
the adjustment data indicate the priority of different types of transport.

11. The method (100; 150) according to any one of claims 3-10, wherein
the adjustment data is obtained by receiving from a communication server, the communication server is configured to provide traffic data indicating a traffic separation and/or a traffic control.

12. The method (100; 150) according to any one of the preceding claims, wherein
the method (100; 150) is for configuring a router.

13. Method (200) to be executed by a communication server, comprising
obtaining (210) configuration data indicating a configuration of a network component;
generating (220), based on the configuration data, traffic data indicating a traffic separation and/or a traffic control for the network component; and
transmitting (230) the traffic data for adjusting a setting of the network component.

14. A computer program having a program code for performing one of the methods (100; 150) of claims 1 to 13, when the computer program is executed on a computer, a processor, or a programmable hardware component.

15. An apparatus (30) for a network component, the apparatus (30) comprising:
one or more interfaces (32) configured to exchange data; and
one or more processing devices (34) configured to perform one of the methods (100; 150) of claims 1 to 13.

## Amended claims

### Amended claims in accordance with Rule 137(2) EPC.

1. A method (100) for configuring a network component, comprising:
initializing (110) a configuration interface configured to exchange data between the network component and an external device, wherein the configuration interface is for configuring the network component, wherein initializing the configuration interface comprises processing hard code for preventing a setting or part of the setting of the configuration interface from changing.

2. The method (100) according to claim 1, wherein
the hard code is processed such that the destination address of the configuration interface is unchangeable.

3. The method (100) according to any one of the preceding claims, further comprising obtaining adjustment data indicating an adjustment of a setting of at least one of a plurality of interfaces; and
adjusting the setting of the at least one interface of the plurality of interfaces based on the adjustment data.

4. A method (150) for configuring a network component, comprising:
initializing a plurality of interfaces, wherein a configuration interface of the plurality of interfaces is configured to exchange data between the network component and an external device, wherein the configuration interface is for configuring the network component;
obtaining adjustment data indicating an adjustment of a setting of at least one interface of the plurality of interfaces; and
if the setting of the configuration interface is affected by the adjustment data, adjusting the setting of the at least one interface of the plurality of interfaces such that at least a part of the setting of the configuration interface remains unchanged or a surrogate interface configured to exchange data between the network component and the external device is set.

5. The method (150) according to claim 4, wherein
keeping the configuration interface unchanged comprises checking whether a further interface of the plurality of interfaces is configured to exchange data with the external device; and
if no further interface is configured to exchange data with the external device, blocking an adjustment of at least a part of the setting of the configuration interface.

6. The method (150) according to claim 4 or 5, wherein
setting the surrogate interface comprises checking, after adjusting the setting of the plurality of interfaces, whether at least one interface of the plurality of interfaces is configured to exchange data between the network component and the external device; and
if no interface of the plurality of interfaces is configured to exchange data with the external device, adjusting an interface of the plurality of interfaces to be configured to exchange data between the network component and the external device.

7. The method (100; 150) according to any one of claims 3-6, wherein
adjusting the setting of the plurality of interfaces comprises adjusting a traffic separation and/or a traffic control of the network component.

8. The method (100; 150) according to any one of claims 7, wherein
adjusting the traffic separation and/or the traffic control comprises generating an application programming interface call; and
processing the application programming interface call for adjusting the setting of the plurality of interfaces.

9. The method (100; 150) according to any claim 7 or 8, wherein
adjusting the traffic separation and/or traffic control comprises adjusting a destination address of at least interface one of the plurality of interfaces.

10. The method (100; 150) according to any one of claims 3-9, wherein
the adjustment data indicate the priority of different types of transport.

11. The method (100; 150) according to any one of claims 3-10, wherein
the adjustment data is obtained by receiving from a communication server, the communication server is configured to provide traffic data indicating a traffic separation and/or a traffic control.

12. The method (100; 150) according to any one of the preceding claims, wherein
the method (100; 150) is for configuring a router.

13. Method (200) to be executed by a communication server, comprising
obtaining (210) configuration data indicating a configuration of a network component;
generating (220), based on the configuration data, traffic data indicating a traffic separation and/or a traffic control for the network component; and
transmitting (230) the traffic data for adjusting a setting of the network component.

14. A computer program having a program code for performing one of the methods (100; 150) of claims 1 to 13, when the computer program is executed on a computer, a processor, or a programmable hardware component.

15. An apparatus (30) for a network component, the apparatus (30) comprising:
one or more interfaces (32) configured to exchange data; and
one or more processing devices (34) configured to perform one of the methods (100; 150) of claims 1 to 13.
